# EUROPEAN PATENT APPLICATION

(11) **EP 2 640 125 A1**
(43) Date of publication of application: **18.09.2013**
(21) Application number: 11839386.7
(22) Date of filing: 30.01.2011
(51) Int. Cl.: H04W 28/18

(54) **METHOD AND APPARATUS OF ADJUSTING THROUGHPUT RATE FOR HIGH SPEED DOWNLINK PACKET ACCESS TERMINAL**

(30) Priority: 12.11.2010 CN 201010543139
(71) Applicant: ZTE Corporation, Shenzhen, Guangdong 518057 (CN)
(72) Inventor: CHEN, Donglei, Shenzhen Guangdong 518057 (CN); WANG, Chen, Shenzhen Guangdong 518057 (CN); WANG, Guozheng, Shenzhen Guangdong 518057 (CN); XU, Hanqing, Shenzhen Guangdong 518057 (CN)
(74) Representative: Bosotti, Luciano
(86) International application number: PCT/CN2011/070815
(87) International publication number: WO 2012/062056

(57) **Abstract**

The present invention provides a method and an apparatus for adjusting a throughput rate of a High Speed Downlink Packet (HSDPA) terminal, wherein the method is used for a hybrid network and includes: setting different phase shift values for a Virtual Antenna Mapping (VAM) in a set period; according to a Channel Quality Indicator (CQI) value fed back by each HSDPA terminal in the set period, selecting a correction phase shift value from the different phase shift values; subjecting the VAM matrix to phase shift using the correction phase shift value; and adjusting a throughput rate of each HSDPA terminal using the VAM matrix subjected to the phase shift. With the present invention, the problem that the HSDPA throughput rate in the hybrid network decreases caused by the adoption of a fixed VAM phase shift is resolved, and further, the effect of improving the throughput rate of the HSDPA terminal is achieved.

## Description

### Technical Field

The present invention relates to the field of communication, and in particular to a method and an apparatus for adjusting a throughput rate of a High Speed Downlink Packet Access (HSDPA) terminal in a hybrid network.

### Background

The 3^{rd} Generation Partnership Project (3GPP) has standardized Double Transmit Antenna Array (D-TxAA) as a Multiple Input Multiple Output (MIMO) technology in Frequency Division Duplex (FDD). When forming a hybrid network of MIMO and HSDPA terminals, it is originally considered that transmission can be performed for an HSDPA terminal by adopting Space Time Transmit Diversity (STTD). However, it is found in test that, for legacy category 8, the throughput rate decreases in the condition of adopting the STTD and the specific performance is related to the wireless environment, because it is designed by the terminal manufacturer that an equalization receiver is turned off to save cost when the STTD function is enabled. If the MIMO terminal and the HSDPA terminal are accessed to two different carriers respectively, without forming the hybrid network, a low carrier utilization rate is caused in the initial stage of the MIMO network deployment. Since the MIMO terminal supports a network to adopt the transmission mode of P-CPICH/P-CPICH (Primary Common Pilot Channel) pilot (referring to sending different modes of the P-CPICH on two antennas) or P-CPICH/S-CPICH (Secondary Common Pilot Channel) pilot (referring to sending primary pilot and secondary pilot on two antennas respectively), the 3GPP has recommended the adoption of the P-CPICH/S-CPICH to the MIMO, thereby avoiding performance reduction caused by the adoption of the STTD transmission for the HSDPA terminal.

In the condition of adopting the transmission mode of P-CPICH/S-CPICH, since the HSDPA terminal can not receive a secondary pilot, the channels of the HSDPA terminal are transmitted at an antenna where the primary pilot is located. Therefore, the power of the channels which are transmitted from two antennas is unbalanced, which results in the reduction of the utilization ratio of one power amplifier. The 3GPP recommends the adoption of a power balance matrix or a Virtual Antenna Mapping (VAM) matrix to balance the power of the power amplifiers. Besides guaranteeing the power balance of the two power amplifiers, in the condition that there are two streams, the VAM matrix also needs to guarantee the power balance of the two streams.

After the VAM matrix is introduced, for a single stream of the MIMO terminal, unbalanced power amplification still exists under the feedback of certain Precoding Control Indication (PCI). If the PCI is not restricted, the performance of the MIMO terminal is reduced dramatically. Therefore, the 3GPP regulates that it is necessary to restrict the PCI when the MIMO terminal performs single stream PCI feedback in the condition that the network side adopts P-CPICH/S-CPICH+VAM.

At present, a fixed phase shift is adopted to restrict the PCI. However, for the HSDPA terminal in the hybrid network, the Channel Quality Indicator (CQI) changes greatly because the PCI restriction changes the phase of the VAM matrix largely. Therefore, for the HSDPA terminal adopting the P-CPICH/S-CPICH+VAM technology, the adoption of a fixed phase shift may cause a sharp decrease in the throughput rate of the HSDPA terminal.

### Summary

The present invention provides a method and an apparatus for adjusting a throughput rate of an HSDPA terminal in a hybrid network, so as to at least solve the above problem that the HSDPA throughput rate in the hybrid network decreases caused by the adoption of fixed VAM phase shift.

According to one aspect of the present invention, a method for adjusting a throughput rate of an HSDPA terminal is provided, which is used for a hybrid network and includes: setting different phase shift values for a VAM matrix in a set period; selecting a correction phase shift value from the different phase shift values, according to a Channel Quality Indicator (CQI) value fed back by each HSDPA terminal in the set period; subjecting the VAM matrix to phase shift using the correction phase shift value; and adjusting a throughput rate of each HSDPA terminal using the VAM matrix subjected to the phase shift.

Preferably, the set period refers to a period from the start of one throughput rate period to a set time; the step of setting the different phase shift values for the VAM matrix in the set period includes: setting the different phase shift values for the VAM matrix in turn in the set period according to θ *= j* * (2π/*n),* where θ represents a phase shift value, n is a positive integer, and j is a positive integer from 1 to n.

Preferably, the step of selecting the correction phase shift value from the different phase shift values, according to the CQI value fed back by each HSDPA terminal in the set period includes: subjecting the VAM matrix in the set period to different phase shifts according to the different phase shift values; acquiring a CQI average value under each phase shift, according to the CQI value fed back by each HSDPA terminal under each phase shift of the different phase shifts; and selecting the correction phase shift value according to the CQI average value under each phase shift.

Preferably, the step of selecting the correction phase shift value according to the CQI average value under each phase shift includes: selecting a phase shift value corresponding to a maximum CQI average value in CQI average values under respective phase shifts as the correction phase shift value.

Preferably, the step of subjecting the VAM matrix to the phase shift using the correction phase shift value includes: subjecting the VAM matrix in one throughput rate period other than the set period to the phase shift, using the correction phase shift value; the step of adjusting the throughput rate of each HSDPA terminal using the VAM matrix subjected to the phase shift includes: adjusting the throughput rate of each HSDPA terminal in the throughput rate period other than the set period, using the VAM matrix subjected to the phase shift.

According to another aspect of the present invention, an apparatus for adjusting a throughput rate of an HSDPA terminal is provided, which is used for a hybrid network and includes: a setting module, which is configured to set different phase shift values for a Virtual Antenna Mapping (VAM) matrix in a set period; a selection module, which is configured to select a correction phase shift value from the different phase shift values, according to a Channel Quality Indicator (CQI) value fed back by each HSDPA terminal in the set period; a correction module, which is configured to subject the VAM matrix to phase shift using the correction phase shift value; and an adjustment module, which is configured to adjust a throughput rate of each HSDPA terminal using the VAM matrix subjected to the phase shift.

Preferably, the set period refers to a period from the start of one throughput rate period to a set time; the setting module is configured to set the different phase shift values for the VAM matrix in turn in the set period according to θ*=j**(2π/*n),* where θ represents a phase shift value, n is a positive integer, and j is a positive integer from 1 to n.

Preferably, the selection module includes: an average value acquisition module, which is configured to subject the VAM matrix in the set period to different phase shifts according to the different phase shift values, and acquire a CQI average value under each phase shift according to the CQI value fed back by each HSDPA terminal under each phase shift of the different phase shifts; and an average value selection module, which is configured to select a phase shift value corresponding to a maximum CQI average value in CQI average values under respective phase shifts as the correction phase shift value.

Preferably, the average value selection module includes: a maximum value selection module, which is configured to select a phase shift value corresponding to a maximum CQI average value in the CQI average value under each phase shift as the correction phase shift value.

Preferably, the correction module is configured to subject the VAM matrix in one throughput rate period other than the set period to the phase shift, using the correction phase shift value; the adjustment module is configured to adjust the throughput rate of each HSDPA terminal in the throughput rate period other than the set period using the VAM matrix subjected to the phase shift.

By virtue of the present invention, different phase shift values are set for a VAM matrix, a correction phase shift value is selected from the set different phase shift values according to the CQI value fed back by each HSDPA terminal, the VAM matrix is subjected to phase shift, and the throughput rate of each HSDPA terminal is adjusted using the VAM matrix subjected to the phase shift. The present invention solves the problem that the HSDPA throughput rate in the hybrid network decreases caused by the adoption of a fixed VAM phase shift, and further achieves the effect of improving the throughput rate of the HSDPA terminal.

### Brief Description of the Drawings

Drawings, provided for further understanding of the present invention and forming a part of the specification, are used to explain the present invention together with embodiments of the present invention rather than to limit the present invention, wherein:
Fig. 1 shows a schematic diagram of the position where the throughput rate of the HSDPA terminal is adjusted in the scene of a hybrid network formed by an MIMO terminal and an HSDPA terminal according to an embodiment of the present invention;
Fig. 2 shows a step flowchart of a method for adjusting a throughput rate of a HSDPA terminal according to an embodiment of the present invention;
Fig. 3 shows a step flowchart of another method for adjusting a throughput rate of a HSDPA terminal according to an embodiment of the present invention;
Fig. 4 shows a sequence diagram for adjusting a throughput rate of a HSDPA terminal according to an embodiment of the present invention;
Fig. 5 shows a step flowchart of a third method for adjusting a throughput rate of a HSDPA terminal according to an embodiment of the present invention; and
Fig. 6 shows a structure diagram of an apparatus for adjusting a throughput rate of a HSDPA terminal according to an embodiment of the present invention.

### Detailed Description of the Embodiments

The present invention is described below in detail by reference to the accompanying drawings in conjunction with embodiments. It should be noted that the embodiments in the application and the characteristics of the embodiments can be combined if no conflict is caused.

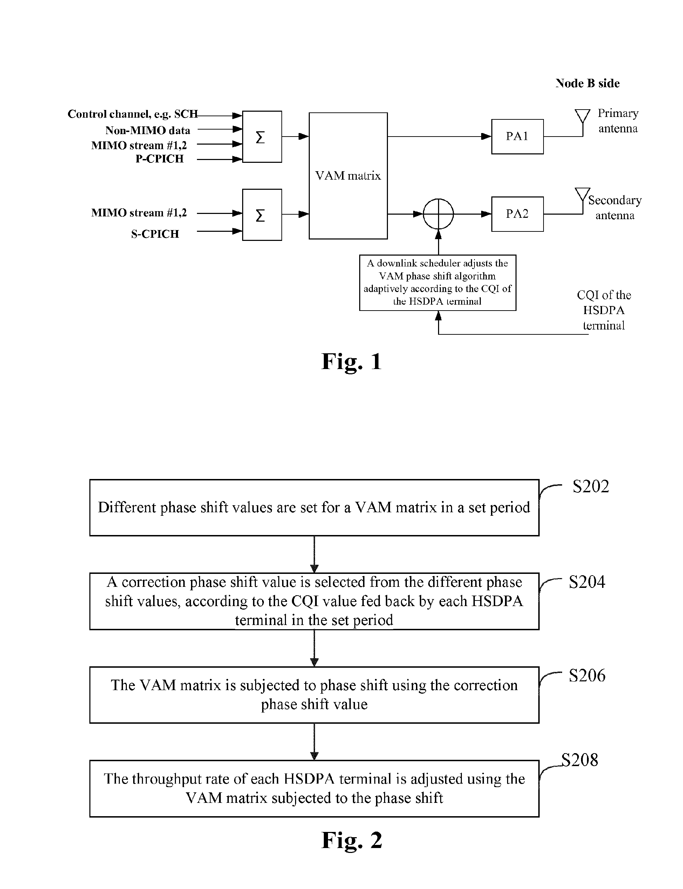

Fig. 1 shows a schematic diagram of the position where the throughput rate of the HSDPA terminal is adjusted in the scene of a hybrid network formed by an MIMO terminal and an HSDPA terminal according to an embodiment of the present invention.

In Fig. 1, ∑ represents channel superposition; PA represents a power amplifier; the 3GPP network side adopts a P-CPICH/S-CPICH+VAM technology; the MIMO terminal performs PCI restriction when performing single stream PCI feedback; for the HSDPA terminal, the method provided in the embodiment of the present invention for adjusting the throughput rate of the HSDPA terminal is adopted to adjust VAM phase shift adaptively according to the CQI value fed back by the HSDPA terminal, and thus to adjust the throughput rate of the HSDPA terminal.

Fig. 2 shows a step flowchart of a method for adjusting a throughput rate of an HSDPA terminal according to an embodiment of the present invention. As shown in Fig. 2, the method includes the following steps.

Step 202: different phase shift values are set for a VAM matrix in a set period.

In this step, a system, for example, an HSDPA scheduler, sets different phase shift values for the VAM matrix in a set period. Preferably, the system sets different phase shift values for the VAM matrix in a period from the start of one HSDPA terminal throughput rate period to a set time. The length of the period can be properly set by those skilled in the art according to actual conditions. Generally, the length of the period is less than the length of one throughput rate period.

Different phase shift values can be set for the VAM matrix by those skilled in the art according to actual conditions, for example, by reference to the existing method used for setting a phase shift value. Preferably, different phase shift values can be set for the VAM matrix in turn according to θ*=j**(2π/*n*)*,* where θ represents the phase shift value, n is a positive integer, and j is a positive integer from 1 to n, wherein the setting is performed in turn according to the incremental change of j, so that the setting of the phase shift values is simple and the cost is lowered.

Step 204: a correction phase shift value is selected from the different phase shift values, according to the CQI value fed back by each HSDPA terminal in the set period.

In this step, the system selects the correction phase shift value from the different phase shift values by using a proper selection algorithm, according to the CQI value fed back in the set period by each HSDPA terminal under different phase shifts. The different phase shifts are obtained by subjecting the VAM matrix to the phase shift according to the different phase shift values.

Step 206: the VAM matrix is subjected to phase shift using the correction phase shift value.

In this step, the system subjects the VAM matrix in one or more throughput rate periods to the phase shift, using the selected correction phase shift value. Preferably, the system subjects the VAM matrix in one throughput rate period in which the set period is contained to the phase shift, using the selected correction phase shift value, so as to adjust the phase shift of the VAM matrix in real time and to improve the throughput rate of the HSDPA terminal.

Step 208: the throughput rate of each HSDPA terminal is adjusted using the VAM matrix subjected to the phase shift.

In the related art, since the VAM matrix uses a fixed phase shift, the HSDPA throughput rate decreases in the hybrid network. However, by virtue of the present embodiment, different phase shift values are set for the VAM matrix, a correction phase shift value is selected from the set different phase shift values according to the CQI value fed back by each HSDPA terminal, the VAM matrix is subjected to the phase shift, and the throughput rate of each HSDPA terminal is adjusted using the VAM matrix subjected to the phase shift, thereby solving the problem that the HSDPA throughput rate in the hybrid network decreases caused by the adoption of a fixed VAM phase shift, and further achieving the effect of improving the throughput rate of the HSDPA terminal.

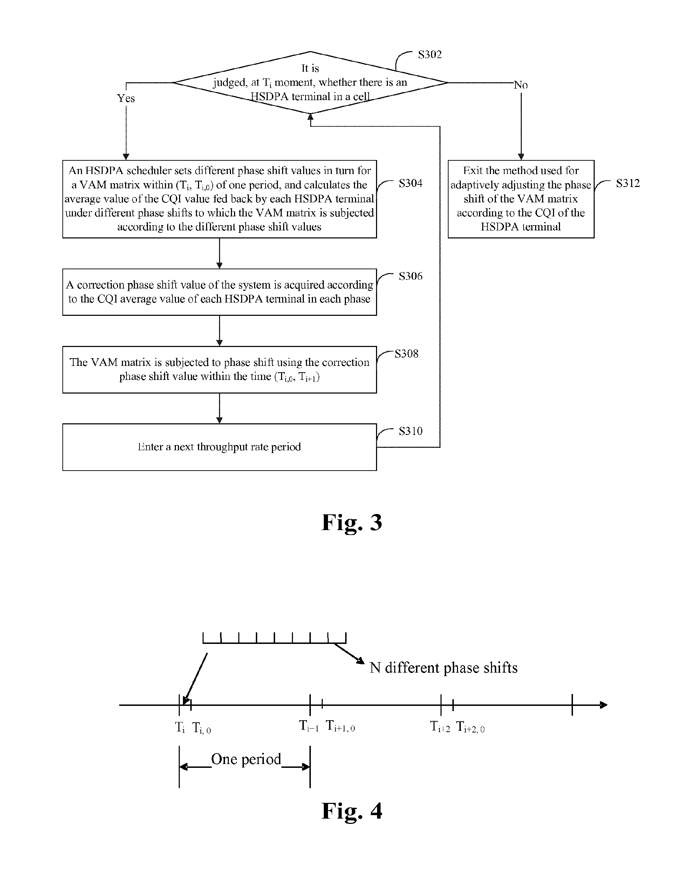

Another method for adjusting a throughput rate of an HSDPA terminal in the scene of a hybrid network formed by a MIMO terminal and an HSDPA terminal according to the embodiment of the present invention is described below in conjunction with Fig. 3 and Fig. 4. Fig. 3 shows a step flowchart of another method for adjusting a throughput rate of an HSDPA terminal according to the embodiment of the present invention. Fig. 4 shows a sequence diagram for adjusting a throughput rate of an HSDPA terminal according to the embodiment of the present invention.

This embodiment includes steps which are described as follows.

Step 302: it is judged, at Tᵢ moment (Tᵢ is an integral multiple of a period for optimizing the throughput rate of the HSDPA terminal), whether there is an HSDPA terminal in a cell; if so, turn to Step 304; otherwise, turn to Step 312.

Step 304: an HSDPA scheduler sets, within (Tᵢ, T_{i,0}) of one period, different phase shift values θ=*j**(2π/*n*) in turn for a VAM matrix, where n is a positive integer, and j is a positive integer from 1 to n. Different phase shift values are set in turn according to the change of j, and the setting time corresponding to each phase shift value is (T_{i,0}-Tᵢ)/ₙ. The average value of the CQI value fed back by each HSDPA terminal under different phase shifts to which the VAM matrix is subjected according to the different phase shift values is calculated.

Step 306: a correction phase shift value of the system is acquired according to the CQI average value of each HSDPA terminal in each phase.

In this step, multiple methods can be adopted to acquire the correction phase shift value. Preferably, the sum of the CQI average values of all HSDPA terminals at each phase shift value can be counted; then, the phase shift value corresponding to the maximum value in all these sums of the CQI average values is found; if the maximum value corresponds to multiple phase shift values, one phase shift value is selected randomly from the multiple phase shift values to serve as the correction phase shift value of the system, so as to achieve a relatively better improvement effect of the throughput rate of the HSDPA terminal. Alternatively, three best phases of each HSDPA terminal can be found out, then, the number of HSDPA terminals for which each of these phases serves as a relatively optimal phase is counted, and the phase corresponding to the maximum number of terminals serves as the correction phase shift value of the system; if the maximum number corresponds to multiple phase shift values, one phase shift value is selected randomly to serve as the correction phase shift value of the system, so as to obtain the correction phase shift value.

Step 308: the VAM matrix is subjected to phase shift using the correction phase shift value within the time (T_{i,0}, Tᵢ₊₁).

Step 310: in a next throughput rate period, turn to Step 302; repeat Step 302 to Step 310.

Step 312: exit the method used for adaptively adjusting the phase shift of the VAM matrix according to the CQI of the HSDPA terminal.

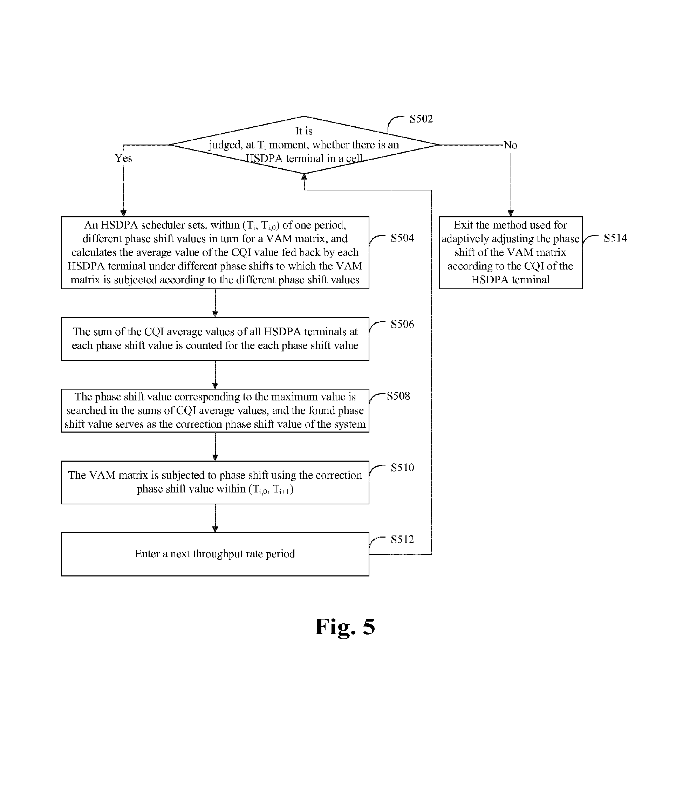

A third method for adjusting a throughput rate of an HSDPA terminal in the scene of a hybrid network formed by a MIMO terminal and an HSDPA terminal according to an embodiment of the present invention is described below in conjunction with Fig. 5 and Fig. 4.

Fig. 5 shows a step flowchart of a third method for adjusting a throughput rate of an HSDPA terminal according to the embodiment of the present invention. Fig. 4 shows a sequence diagram for adjusting a throughput rate of an HSDPA terminal according to the embodiment of the present invention.

This embodiment includes steps which are described as follows.

Step 502: it is judged, at Tᵢ moment, whether there is an HSDPA terminal in a cell; if so, turn to Step 504; otherwise, turn to Step 514. In this embodiment, Tᵢ is equal to i*800 Transmission Time Intervals (TTI), each TTI being of 2ms.

Step 504: an HSDPA scheduler sets, within (Tᵢ, T_{i,0}) of one period, different phase shift values θ=*j**(π/4) in turn for a VAM matrix, where j is a positive integer from 1 to 8, and the setting time corresponding to each phase shift value is (T_{i,0}-Tᵢ)/8. The average value of the CQI value fed back by each HSDPA terminal at different phase shift values θ is calculated. Here, (T_{i,0}-Tᵢ) is equal to 200 TTIs, each TTI being of 2ms.

Step 506: the sum of the CQI average values of all HSDPA terminals at each phase shift value is counted for the each phase shift value.

In this step, each HSDPA terminal probably feeds back multiple CQI values in one period, first, the multiple CQI values fed back by the HSDPA terminal are averaged; then, the average value of the CQI values fed back by each HSDPA terminal at each phase shift value is added together.

Step 508: the phase shift value corresponding to the maximum value is searched in the eight sums of CQI average values. If the maximum value corresponds to multiple phase shift values, one phase shift value is selected randomly to serve as the correction phase shift value of the system.

Step 510: the VAM matrix is subjected to phase shift using the correction phase shift value within (T_{i,0}, Tᵢ₊₁). Here, (Tᵢ₊₁-T_{i,0}) is equal to 600 TTIs, each TTI being of 2ms.

Step 512: in a next throughput rate period, turn to Step 502; repeat Step 502 to Step 512.

Step 514: exit the method used for adaptively adjusting the phase shift of the VAM matrix according to the CQI of the HSDPA terminal.

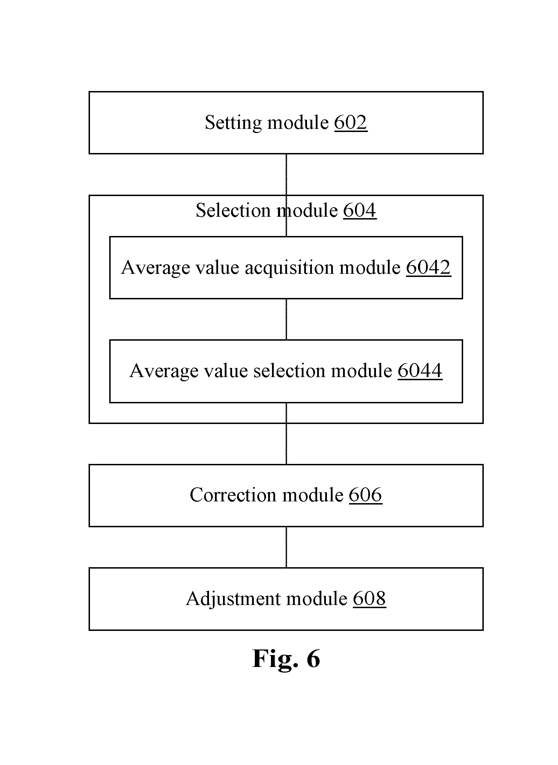

Fig. 6 shows a structure diagram of an apparatus for adjusting a throughput rate of an HSDPA terminal according to an embodiment of the present invention. As shown in Fig. 6, the apparatus includes:
a setting module 602, which is configured to set different phase shift values for a VAM matrix in a set period; a selection module 604, which is configured to select a correction phase shift value from the different phase shift values, according to a CQI value fed back by each HSDPA terminal in the set period; a correction module 606, which is configured to subject the VAM matrix to phase shift using the correction phase shift value; and an adjustment module 608, which is configured to adjust the throughput rate of each HSDPA terminal using the VAM matrix subjected to the phase shift.

Preferably, the set period refers to a period from the start of one throughput rate period to a set time. The setting module 602 is configured to set different phase shift values for the VAM matrix in turn in the set period according to θ*=j**(2π/*n),* where θ represents the phase shift value, n is a positive integer, and j is a positive integer from 1 to n.

Preferably, the selection module 604 includes: an average value acquisition module 6402, which is configured to subject the VAM matrix in the set period to different phase shifts according to the different phase shift values, and acquire a CQI average value under each phase shift according to the CQI value fed back by each HSDPA terminal under each phase shift of the different phase shifts; and an average value selection module 6044, which is configured to select a correction phase shift value according to the CQI average value under each phase shift.

Preferably, the average value selection module 6044 includes: a maximum value selection module, which is configured to select a phase shift value corresponding to a maximum CQI average value in the CQI average value under each phase shift as the correction phase shift value.

Preferably, the correction module 606 is configured to subject the VAM matrix in a throughput rate period other than the set period to the phase shift, using the correction phase shift value; the adjustment module 608 is configured to adjust the throughput rate of each HSDPA terminal in the throughput rate period other than the set period, using the VAM matrix subjected to the phase shift.

It can be seen from the above description that, in the method provided by the embodiments of the present invention for improving the throughput rate of the HSDPA terminal in the scene of the hybrid network formed by the MIMO terminal and the HSDPA terminal, during each period for optimizing the throughput rate of the HSDPA terminal, different phase shift values are set for the VAM matrix first to obtain a CQI average value under each phase shift, then, the sum of the CQI average value of each HSDPA terminal under each phase shift is counted, and finally the maximum value in these sum values is taken as the correction phase shift value to perform VAM matrix phase shift. After the adjustment, the VAM matrix at the network side keeps the phase shift in a following period, and the complete operation of a period is finished. In a next period, the above process is repeated so that the UE can update the optimal phase shift value of the VAM matrix continuously when the channel condition changes. By virtue of this method, the throughput rate of the HSDPA terminal is improved, and no big impact is caused to the throughput rate of the MIMO terminal for the MIMO terminal has a PCI feedback mechanism. This method is not only applicable to the scene of adopting the P-CPICH/S-CPICH+VAM transmission technology in the hybrid network formed by the MIMO terminal and the HSDPA terminal, but also is applicable to the scene of adopting the P-CPICH+VAM transmission technology in some cases in the network without the MIMO terminal.

Obviously, those skilled in the art shall understand that the above-mentioned modules and steps of the present invention can be realized by using general purpose calculating device, can be integrated in one calculating device or distributed on a network which consists of a plurality of calculating devices. Alternatively, the modules and the steps of the present invention can be realized by using the executable program code of the calculating device. Consequently, they can be stored in the storing device and executed by the calculating device, or they are made into integrated circuit module respectively, or a plurality of modules or steps thereof are made into one integrated circuit module. In this way, the present invention is not restricted to any particular hardware and software combination.

The descriptions above are only the preferable embodiment of the present invention, which are not used to restrict the present invention. For those skilled in the art, the present invention may have various changes and variations. Any amendments, equivalent substitutions, improvements, etc. within the principle of the present invention are all included in the scope of the protection of the present invention.

## Claims

1. A method for adjusting a throughput rate of a High Speed Downlink Packet (HSDPA) terminal, **characterized in that** the method is used for a hybrid network and comprises:
setting different phase shift values for a Virtual Antenna Mapping (VAM) matrix in a set period;
selecting a correction phase shift value from the different phase shift values, according to a Channel Quality Indicator (CQI) value fed back by each HSDPA terminal in the set period;
subjecting the VAM matrix to phase shift using the correction phase shift value; and
adjusting a throughput rate of each HSDPA terminal using the VAM matrix subjected to the phase shift.

2. The method according to claim 1, **characterized in that** the set period refers to a period from the start of one throughput rate period to a set time; the step of setting the different phase shift values for the VAM matrix in the set period comprises:
setting the different phase shift values for the VAM matrix in turn in the set period according to θ*=j**(2π/*n),* where θ represents a phase shift value, n is a positive integer, and j is a positive integer from 1 to n.

3. The method according to claim 1 or 2, **characterized in that** the step of selecting the correction phase shift value from the different phase shift values, according to the CQI value fed back by each HSDPA terminal in the set period comprises:
subjecting the VAM matrix in the set period to different phase shifts according to the different phase shift values;
acquiring a CQI average value under each phase shift, according to the CQI value fed back by each HSDPA terminal under each phase shift of the different phase shifts; and
selecting the correction phase shift value according to the CQI average value under each phase shift.

4. The method according to claim 3, **characterized in that** the step of selecting the correction phase shift value according to the CQI average value under each phase shift comprises:
selecting a phase shift value corresponding to a maximum CQI average value in CQI average values under respective phase shifts as the correction phase shift value.

5. The method according to claim 1, **characterized in that** the step of subjecting the VAM matrix to the phase shift using the correction phase shift value comprises:
subjecting the VAM matrix in one throughput rate period other than the set period to the phase shift, using the correction phase shift value;
the step of adjusting the throughput rate of each HSDPA terminal using the VAM matrix subjected to the phase shift comprises:
adjusting the throughput rate of each HSDPA terminal in the throughput rate period other than the set period, using the VAM matrix subjected to the phase shift.

6. An apparatus for adjusting a throughput rate of a High Speed Downlink Packet (HSDPA) terminal, **characterized in that** the apparatus is used for a hybrid network and comprises:
a setting module, which is configured to set different phase shift values for a Virtual Antenna Mapping (VAM) matrix in a set period;
a selection module, which is configured to select a correction phase shift value from the different phase shift values, according to a Channel Quality Indicator (CQI) value fed back by each HSDPA terminal in the set period;
a correction module, which is configured to subject the VAM matrix to phase shift using the correction phase shift value; and
an adjustment module, which is configured to adjust a throughput rate of each HSDPA terminal using the VAM matrix subjected to the phase shift.

7. The apparatus according to claim 6, **characterized in that** the set period refers to a period from the start of one throughput rate period to a set time; the setting module is configured to set the different phase shift values for the VAM matrix in turn in the set period according to θ*=j**(2π/*n*)*,* where θ represents a phase shift value, n is a positive integer, and j is a positive integer from 1 to n.

8. The apparatus according to claim 6 or 7, **characterized in that** the selection module comprises:
an average value acquisition module, which is configured to subject the VAM matrix in the set period to different phase shifts according to the different phase shift values, and acquire a CQI average value under each phase shift according to the CQI value fed back by each HSDPA terminal under each phase shift of the different phase shifts; and
an average value selection module, which is configured to select a phase shift value corresponding to a maximum CQI average value in CQI average values under respective phase shifts as the correction phase shift value.

9. The apparatus according to claim 8, **characterized in that** the average value selection module comprises:
a maximum value selection module, which is configured to select a phase shift value corresponding to a maximum CQI average value in the CQI average value under each phase shift as the correction phase shift value.

10. The apparatus according to claim 6, **characterized in that** the correction module is configured to subject the VAM matrix in one throughput rate period other than the set period to the phase shift, using the correction phase shift value; the adjustment module is configured to adjust the throughput rate of each HSDPA terminal in the throughput rate period other than the set period using the VAM matrix subjected to the phase shift.
